# EUROPEAN PATENT APPLICATION

(11) **EP 1 300 748 A2**
(43) Date of publication of application: **09.04.2003**
(21) Application number: 02078887.3
(22) Date of filing: 23.09.2002
(51) Int. Cl.: G06F 1/00

(54) **Method and system for managing, accessing and paying for the use of copyrighted electronic media**

(30) Priority: 04.10.2001 US 971153
(71) Applicant: EASTMAN KODAK COMPANY, Rochester, New York 14650 (US)
(72) Inventor: Bryant, John W., Eastman Kodak Company, Rochester, New York 14650-2201 (US); Oswald, Craig T., Eastman Kodak Company, Rochester, New York 14650-2201 (US)
(74) Representative: Haile, Helen Cynthia

(57) **Abstract**

This invention is a method and system for the management, access and payment for use of copyrighted electronic media. Original electronic media is steganographically tagged with a copyright identifier prior to being registered in an electronic media registry. Upon registration, a unique media identifier is provided by the system. The media is then stored on a networked database. Basic licensing terms are then created and also stored in a networked database. Derivative content is created from the original media and steganographically tagged with the appropriate media identifier. The derivative content is subsequently published electronically and can be used in conjunction with the networked system to identify the copyright owner, obtain the original electronic media or obtain some form of output via enabled service providers.

## Description

The present invention relates electronic copyrighted media and, more particularly, to a method and system for licensing copyrighted electronic media in which a substantially unusable version of the copyrighted media is electronically distributed, and upon acceptance of licensing conditions, the original copyrighted is distributed.

A white paper entitled "Intellectual Property and the National Information Infrastructure", issued in September 1995 by the U.S. Commerce Department discloses protecting copyrighted information in cyberspace and the ease of copying works of authorship. Copyright violation and theft abounds in the information age. It occurs in all forms of electronic media such as music, text, video, media and graphics. This is facilitated by the ease of making substantially perfect duplicates of almost any electronic content with a simple right mouse click, the 'save as' function of one's personal computer. Once an electronic file has been copied, it can as easily be shared with a vast number of persons via e-mail, peer-to-peer Intranet or Internet communities, and the like.

In the prior art, methods have been developed to enhance copyright protection of electronic media of various forms. Digital watermarking or steganographic methods have been applied to media, audio, video, graphics and text. Methods such as those disclosed by Digimarc involve a system that encodes data into media by carefully adjusting the digital representation of individual pixels. AT&T Bell Laboratories and others has developed a system that makes tiny adjustments to the spacing between words so that every copy of a document is unique. Another method of embedding data is shown in U.S. Patent 6,044,182 by Daly et al. entitled *Method for Embedding Digital Information in a Image.* It discloses a method of embedding digital data in a source image that generates a multi-level data image representing the digital data. The multilevel data image is convolved with an encoding carrier image to produce a frequency dispersed data image, and the frequency dispersed data image is added to the source image to produce a source image containing embedded data. The data is recovered from the image by cross correlating the source image containing embedded data with a decoding carrier image to recover the data image, and extracting the digital data from the recovered data image.

For video content, U.S. Patent 6,026,193 to Geoffrey B. Rhoads entitled *Video Steganography* discloses a method of decoding encoded video to extract multi-bit auxiliary data.

All of these technological methods only mark the electronic content. One then has to devise a system that utilizes this content and the steganographic data in a way that allows for control or authorization of use of the content. There are methods and systems for control and authorization of usage of digital media. U.S. Patent No. 5,832,119 to Geoffrey B. Rhoads entitled *Method for Controlling Systems Using Control Signals Embedded in Empirical Data* is one such system. An embedded multi-bit signal is steganographically detected from empirical data, such as media or audio data, and some aspect of a related system's operation is controlled in accordance therewith.

The prior art goes beyond methods to embedding steganographic data into electronic media or methods and apparatus for controlling systems based on steganographic data. In the prior art, methods have been developed to manage the access to copyrighted works, providing a systematic way of controlling the rights to copyrighted electronic media.

U.S. Patent No. 5,765,152 to Erickson entitled *System and Method for Managing Copyrighted Electronic Media* discloses such a system. Within this invention, copyrighted electronic media are packaged in a secure electronic format, and registered on associated registration server, which serves to provide on-line licensing and copyright management for that media. Users are connecting to the server through a computer network or the Internet, to enable data transfers and to transact licenses to utilize the media. Once the packaged media is registered on the server, the media is made available for limited use and possible license through an authorization server. This limited use is specified within the minimum permission data set assigned to each packaged media. Without a license, users are permitted to view the packaged media through a system which unpacks the media - - but cannot save or otherwise transfer the media without obtaining auxiliary permissions to do so from the authorization server.

This patent discloses balancing between the free access for fair use and ownership protection. However, it solves the problem of balance in a fairly typical way of imposing a closed system solution on both the owners and the users of the electronic media. The owners must 'package' their content prior to registering and storing it within the system. A user must use a 'viewer' and/or rely upon their software developer to incorporate the appropriate functionality of the system through the use of a 'software development kit'. Both owners and users must engage the electronic media in a very controlled and restrictive manner.

The Internet's growth is in part due to the open paradigm of sharing and interacting without tedious constraints and conformance. Given the rampant copying of electronic content, particularly content on the World Wide Web, many authors of copyrighted work have avoided putting content on the Internet due to the risk of having it used without their consent and the associated monetary losses associated with that use. In a lot of situations, however, authors have put alternative forms of electronic media on the web. In the case of electronic imaging, low-resolution copyrighted versions of the images, referred to herein after as derivatives, are found on the web with some form of visual copyright markings attached. By publishing low-resolution derivative copies of images on-line, the copyright owner markets the content to the broad public as well as ensures the free access for fair use. At the same time, the owner retains protection of the high-resolution, truly valued images. This is a common practice not only in imaging but also in text, graphics, audio/music and video. Quite often, either lower resolution or segments of electronic content are published publicly on the Internet for public consumption. Although this 'derivative' content is copyright protected, unauthorized uses are often found. It is copied, used and re-used, in many cases without any compensation to the content owner. This may be in part a result of how difficult it is to identify the owner of this content to provided appropriate compensation.

U.S. Patent No. 5,765,152 (discussed hereinabove) is one solution to the management of copyrighted electronic media but it has several shortcomings. Fundamentally, it is a closed-system solution. Creators of media must packaged their media and register it with a minimum set of permissions. More importantly, and more restrictive, users must log on to an authorization server while using a particular viewing module to view and request a license for the media. This is in essence forcing users of electronic media to a designated server for content. If a person serendipitously sees media and wants to either identify the owner or obtain the original content for use, this system is of little value. Namely, there is no direct connection between the media sought and what is in this system.

According to this patent, the packaged media can not be readily displayed on a web page given that a browser such as Netscape or Internet Explorer may not be enabled to display it. The browser's basic functionality (e.g. 'save as') may be in conflict with the minimum permissions of the packaged media. In order to use the widely distributed version of the packaged media, one has to have and use the viewing module. This is contradictory to being generally usable for free and fair use.

Although this invention is satisfactory, it appears to be biased towards ownership protection, placing significant burden on users.

Therefore, a need exists for a more open system for managing, accessing and paying for the use of electronic media.

This invention is a method and system for the management, access and payment for use of copyrighted electronic media. Original electronic media is steganographically tagged with a copyright identifier prior to being registered in an electronic media registry. Upon registration, a unique media identifier is provided by the system. The media is then stored on a networked database. Basic licensing terms are then created and also stored in a networked database. Derivative content is created from the original media and steganographically tagged with the appropriate media identifier. The derivative content is subsequently published electronically and can be used in conjunction with the networked system to identify the copyright owner, obtain the original electronic media or obtain some form of output via enabled service providers.
Fig. 1 is a diagram illustrating a copyright owner and a registry for registering the created copyrighted works;
Fig. 2 is a schematic diagram illustrating the system of the present invention for licensing copyrighted works; and
Fig. 3 is a flow diagram illustrating the creation of an alternative form of the copyrighted media.

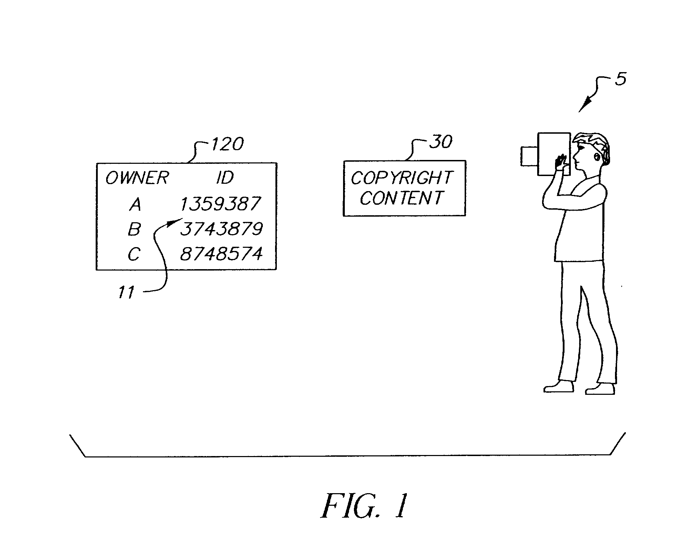

Referring to Fig. 1, there is shown a copyright owner or media creator 5 who captures copyrighted media 30, images in this embodiment, and registers his relevant information about themselves such as name, business name, and address, with the creator registry 120. The creator 5 then receives a unique identification 11 from the registry 120.

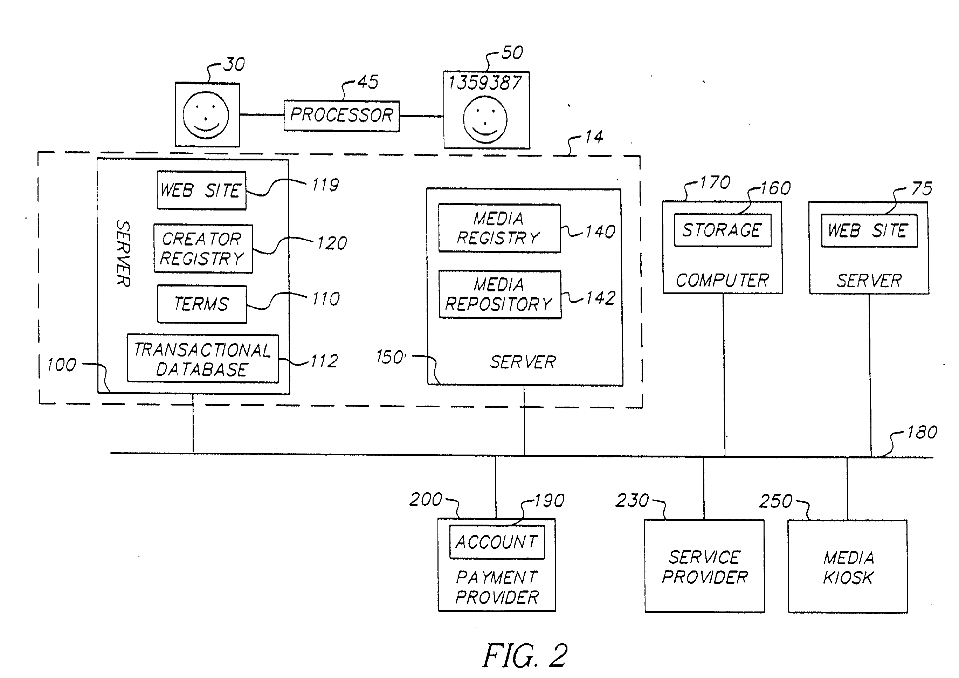

Referring to Fig. 2, the creator's media is then provided to the digital rights management service (RMS) 14 to be registered. In this regard, a unique media identifier is created by the media registry 140, which is located on an Internet accessible server 150. If the media is not in a digital format, the RMS 14 will convert it into the appropriate digital format via any well-known technique. As part of this registration, an electronic version of the copyrighted source media 30 will then be stored within a secured centralized media repository 142. If the copyright owner chooses, they can store this copyrighted media 30 on storage device 160 located on a different networked computer 170. This computer 170 can be, for example, the copyright owner's computer and the like. If this is done the associated network address (or URL) and any necessary user identifications and passwords must be input in the media registry 140 to permit the RMS 14 to obtain the copyrighted media 30, and to distribute the media 30 after licensing. It is instructive to note that both the media registry 140 and media repository 142 reside on a network-accessible server 150.

In addition, a predetermined set of licensing terms is entered into the licensing terms database 110. These terms contain the legally binding clauses and conditions for protecting the copyrighted media 30; for example, in an image, the length of use, circulation requirements, the type of application (book, magazine and the like), and cost. A person seeking to use the copyrighted media 30 from the RMS 14 can select licensing terms in various combinations depending on their needs. Each combination of terms represents a unique identification. This unique identification will be assigned a unique identifier for permitting monitoring and tracking of the license. Server 100 derives the associated usage cost from the chosen combination of terms.

Alternatively, in lieu of the creator registry 120 creating an identification unique to the creator 5, a unique creator watermark could have already been embedded in the electronic media 30 prior to submission to the rights management service 14 for use as the creator identifier. This embedding is well known in the art and will not be discussed in detail herein. In regards to image media, it could be embedded by a digital camera capture or at film or print scanning.

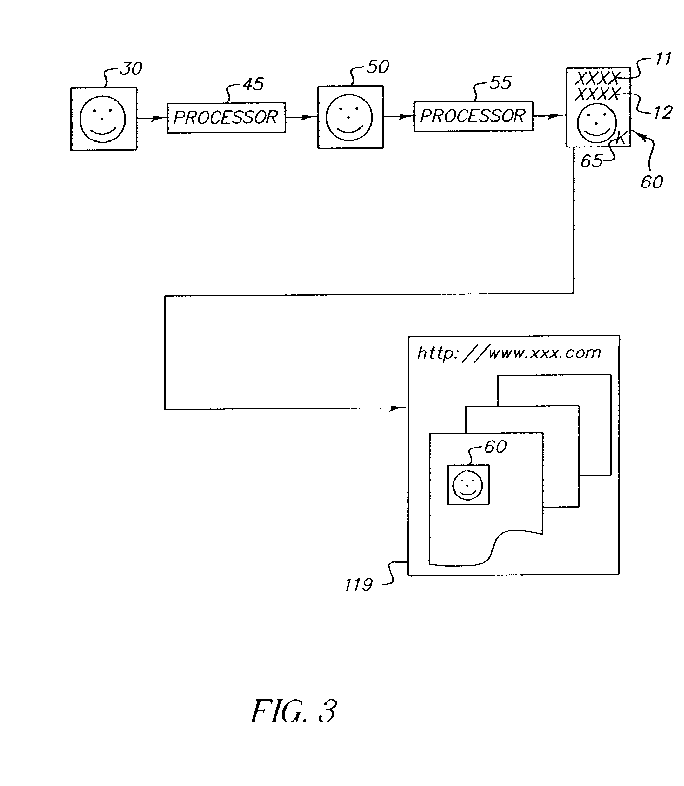

Referring to Figs. 2 and 3, the electronic source media 30 is then processed by a processor 45 to generate a derivative media 50. This derivative media 50 is processed by a processor 55 of the RMS 14 to steganographically embed information that includes the copyright owner's identification 11 and a media identification 12 which uniquely identifies the particular copyrighted media. A visually perceptible watermark 65 is added to the media 50 by the processor 55 for indicating that the media is copyrighted and includes embedded information. This media 60 will be published so that prospective licensees can view the derivative media 60 and decide whether they wish to license the copyrighted media 30. The media 60 may be published on a website 119 in which a user views the media 60 and decides, based on the content and any associated terms and the like, whether they wish to license media 30 as described in detail hereinbelow. The media 60 may also be published on any other suitable website 75.

For example, in terms of still images, low-resolution web images will be steganographically tagged and published for prospective licensees to review. In terms of audio or video, clips or segments of lower quality may be created, steganographically tagged and published to aid in communication of media to be licensed.

A user can purchase a license for use of media registered and managed by the rights management system 14. In this particular embodiment, the user would enter the RMS 14 via the web interface 119. The user would review the media by reviewing its associated steganographically embedded derivative 60. The user would then click an hypertext link for indicating a desire to license the media. Upon that indication, the associated information like proprietor and licensing terms would be presented. The user would select a set of terms for a particular media. These terms will be transmitted from the licensing terms database 110 to the user's computer via the network 180. The user will chose a set of terms based on their needs. This set of terms will be transmitted from the user's computer to the RMS licensing terms database 110. The server 100 will translate this particular set of terms into an associated licensing cost. This cost will be transmitted to the user's computer via the network 180. Upon actively accepting these terms and cost and providing on-line payment, the user would receive a license. The license can be an electronic document and/or a physical document that is subsequently delivered to the licensee.

The associated cost of licensing media can be paid on-line. A networked payment provider 200 would have an account database 190 that will be used to verify that appropriate funds exist (to cover cost incurred by the licensee). The payment provider 200 will pay the RMS service 14 by transferring funds from the licensee's s specific account to the RMS provider 14 via the communication channel 180. The RMS 14 will then aggregate and distribute appropriate funds to the media creator 5. This and all such transaction will be monitored and recorded in the transactional database 112 such that usage reports of various kinds can be created and provided to media creator 5.

The media 30 will then be provided to the licensee. This can be done electronically over the network 180 or physically (for example, a CD, a hardcopy print, a zip drive and the like). Electronically, it can be done using encryption and keys, if high levels of security are required. In either case, the media 30 will be steganographically encoded with a minimum set of information, such as at a minimum, a watermark which includes the proprietors' identification 11, the media identification 12 and a license identification marker for subsequent monitoring and tracking usage of that media 30. These three identifications can be incorporated into one watermark. If media is provided to user over a network, it may be encrypted based on a specific key. A user would receive the encrypted media and be required to a have a particular key to unlock and use it.

### Additional services enabled by steganographically embedded information

It is instructive to note that, in addition to permitting licensing, the RMS 14 enables access to additional services such as tracking, and other on-line media fulfillment. In this regard, regardless of where the steganographically encoded derivative media 60 is published or displayed it will retain its embedded information. All on-line visitors to web sites where the media 60 is published can use this media 60 to obtain information about the media creator 5 or for some other subsequent use. A person can simply upload this media 60 to a service provider 230 who has access to the overall RMS 14 for obtaining such information. A user can obtain the derivative media 60 by simply using a standard web browser and mouse. By placing their mouse pointer on the media and right clicking, the customer can 'save as' or 'copy location' for obtaining a copy of the derivative media 60. This functionality is provided in both Netscape © and Internet © explorer web browser.

Alternatively and as those skilled in the art will readily recognize, a user may use a plurality of well-known devices 250 for accessing the service provider 230. These devices may be, for example, a retail networked media device similar to a media kiosk or some other type of networked media device like a PDA all of which are well known in the art. The derivative media 60 may be retrieved from a web site and stored on a variety of devices. For example, in using an imaging kiosk, the user insert storage medium having the derivative file which can then uploaded from the device's local storage.

Once a user has obtained the derivative media 60, it can be provided to a on-line service provider for requesting a particular output like prints, posters or t-shirts. Once the user completes this order request via the service provider 230 the media 60 is processed to extract the steganographically embedded signal . This signal is provided to the RMS 14 to obtain information about the source media 30. This extracted signal along with basic terms of use (output type, quantity, etc.) are provided to the licensing terms database 110 to calculate the appropriate usage costs. If the user agrees the cost, the original electronic media from the centralized media database 142 or defined network computer 170 is provided to the service provider 230 so that the request can be fulfilled. Every use of the copyrighted media 30 is recorded in the transactional database 112.

As an additional feature, a user can take hardcopy output provided either directly by RMS 14 or derived from the source media 30 to acquire additional services. For example, a professional hardcopy print with an embedded signal of the copyright owner and the particular media can be presented to an imaging kiosk where the image can be scanned. The scanned image can be processed to obtain the embedded signal. This signal can be submitted to the RMS system via a network connection. Information of ownership, usage rights and costs can be provided to the customer via the kiosk user interface. Reprints can be provided with payment ensured back to the media creator 5 via the RMS 14.

### Network searching based on steganographically embedded information

If derivative media 60 is copied and displayed elsewhere on the network 180 or if electronic media 30 or a scanned hardcopy media derived from media 30 is subsequently displayed elsewhere on the network 180, the RMS service 14 can search the network 180 and identify locations having this media based on the steganographically embedded information.

The search results can be compared against the media registry 140, so that a general report can be provided to the media creator 5. In instances of illicit use, automated notifications can be sent indicating awareness of illicit use and requiring licensing to be obtained. This notification can have an automated link back into the RMS 14. In instances of legal use, other media registered by the same media creator 5 can be identified within the RMS 14, and a notification can be transmitted from the RMS service 14 to the identified licensee for identifying additional licensing opportunities.

### Querying the RMS media registry using steganographically embedded media

An additional feature of RMS system 14 is that any electronic media with a RMS embedded watermark can be submitted to registry to obtain information or to license the media. Hence, a media derivative 60 or an electronic version can be used to perform a search. The submitted media 60 will be processed to extract the watermark. The watermark is then used to obtain the proprietor of identifier, the media identifier or license identifier. Any one of these identifiers or some combination thereof can be used to search the database for given criteria.

## Claims

1. A method for licensing copyrighted electronic media, the method comprising the steps of:
(a) storing a first digital representation of the copyrighted media which digital representation includes digital information;
(b) creating a second digital representation of the copyrighted electronic media having a portion of the digital information of the first digital representation;
(c) steganographically embedding information in the second digital representation;
(d) electronically publishing the steganographically embedded second digital representation; and
(e) steganographically encoding information in the first digital representation prior to transmitting to a licensee.

2. The method as in claim 1 further comprising the step of providing licensing conditions having conditions for licensing the copyrighted media.

3. The method as in claim 1, wherein step (e) includes encoding either individually or in any combination: (i) proprietor registration identifier, (ii) an electronic media identifier, and/or (iii) identifier of license conditions for a particular licensee.

4. The method as in claim 2 further comprising the step of recording licensing data upon acceptance of a portion of the licensing conditions.

5. The method as in claim 4 further comprising the step of providing transactional information indicating at least one of: (i) number of registrations, and/or (ii) licensing revenues generated for a copyrighted media.

6. The method as in claim 1, wherein step (a) includes storing the copyrighted media in a centralized media repository.

7. The method as in claim 1, wherein step (a) includes storing the copyrighted media on a network accessible computer.

8. The method as in claim 1 further comprising the step of encrypting the steganographically encoded information in either step (c) or (e) prior to transmission.

9. The method as in claim 1, where step (e) includes encrypting the steganographically encoded information prior to embedding.

10. The method as in claim 1 further comprising the step of registering on a server a registration identification for a proprietor.
